# EUROPEAN PATENT APPLICATION

(11) **EP 0 631 113 A2**
(43) Date of publication of application: **28.12.1994**
(21) Application number: 94304541.9
(22) Date of filing: 22.06.1994
(51) Int. Cl.: G01F 1/68

(54) **A meter for measuring air flow by resistance heating and a method of measuring air flow**

(30) Priority: 22.06.1993 JP 150103/93
(71) Applicant: HITACHI, LTD., Chiyoda-ku, Tokyo 101 (JP); HITACHI AUTOMOTIVE ENGINEERING CO., LTD., Katsuta-shi Ibaraki 312 (JP)
(72) Inventor: Ichimaru, Masahiro, Katsuta-shi, Ibaraki 312 (JP); Watanabe, Izumi, Katsuta-shi, Ibaraki 312 (JP)
(74) Representative: Paget, Hugh Charles Edward

(57) **Abstract**

A meter for measuring air flow by resistance heating has a heating resistor portion (10) and four leads (8) for electrically connecting the resistor portion to a control device. A first pair of leads is used for supplying a current to the resistor portion and second pair of leads is used for measuring a voltage across the resistor. Accordingly errors in heat control due to resistances of a support, welding portion, wire bonding portion, etc. between a terminal of a sensing element and a driving circuit can be eliminated, to permit detection of an air flow rate with high accuracy.

## Description

The present invention relates to an air flow meter for detecting an air flow rate, and more particularly to a resistance heating type air flow meter suitable for example for measurement of an intake air quantity being sucked into an internal combustion engine.

A conventional thermal type air flow meter for measuring an intake air quantity sucked into an internal combustion engine is described in JP-A-4-186123, for example. In this thermal type air flow meter, a temperature sensing resistor located in an auxiliary passage is electrically connected through a conductive support to a driving circuit provided outside a main passage.

Further, a conventional temperature sensing resistor is described in JP-A-Hei 2-205721, for example. This temperature sensing resistor has a structure in which lead wires are connected to both ends of a sensing element. Thus, the temperature sensing resistor is electrically connected through the lead wires to an external device.

In the prior art mentioned above, various resistor portions such as a support, welding portion and wire bonding portion are present between a terminal of the sensing element and the driving circuit. Resistance in such resistor portions is not constant, causing an error in measurement of a temperature of the sensing element or in heat control. In recent years, the detection of an air flow rate with a high accuracy has been demanded, so that the influence of the resistor portions present between the sensing element and the driving circuit is not negligible.

It is accordingly an object of the present invention to provide a resistance heating type air flow meter and a temperature sensing resistor which can detect an air flow rate with a high accuracy.

According to the first aspect of the present invention, there is provided a resistance heating type air flow meter for measuring an air flow rate by using a heating resistor having a resistor portion and a lead member for electrically connecting said resistor portion to an external device, wherein said lead member comprises a first lead member for supplying a current to said resistor portion and a second lead member for measuring a voltage in said resistor portion.

According to a second aspect of the present invention, there is provided a resistance heating type air flow meter for measuring air flow rate by using a heating resistor, wherein said heating resistor has a connector portion having four terminals electrically connected together. By the present invention, an air flow rate may be detected highly accurately with little or no influence of its connecting wires, etc.

Embodiments of the invention will now be described by way of non-limitative example with reference to the accompanying drawings, in which:-

Fig. 1 is a sectional view of a hot-wire type air flow meter embodying the present invention.

Fig. 2 is a partially cutaway, side view of a first embodiment of a unit comprising a heating resistor according to the present invention.

Fig. 3 is a view similar to Fig. 2, showing a second embodiment of the unit according to the invention.

Fig. 4 is a view similar to Fig. 2, showing a third embodiment of the unit according to the invention.

Figs. 5 and 6 are views similar to Fig. 2, showing a fourth embodiment of the unit according to the invention.

Fig. 7 is a view similar to Fig. 2, showing a fifth embodiment of the unit according to the invention.

Fig. 8 is a sectional view of a first embodiment of a plate-like unit comprising a heating resistor according to the present invention.

Fig. 9 is a view similar to Fig. 8, showing a second embodiment of the plate-like unit according to the invention.

Fig. 10 is a view similar to Fig. 8, showing a third embodiment of the plate-like unit according to the invention.

Fig. 11 is a view similar to Fig. 8, showing a fourth embodiment of the plate-like unit according to the invention.

Fig. 12 is a view similar to Fig. 8, showing a fifth embodiment of the plate-like unit according to the invention.

Fig. 13 is a perspective view showing a plate-like unit of the invention mounted on terminals.

Fig. 14 is a perspective view showing another manner of mounting a plate-like unit of the invention on terminals.

Fig. 15 is a view similar to Fig. 8, showing another embodiment of the plate-like unit according to the invention.

Fig. 16 is a sectional view of an embodiment of a plate-like unit of the invention provided with a connector, partially shown in plan.

Fig. 17 is a view similar to Fig. 16, showing another embodiment of the plate-like unit of the invention.

Fig. 18 is a schematic block diagram showing a fuel injection system including a plate-like unit according to the invention.

Fig. 19 is a schematic block diagram showing another fuel injection system including plate-like units according to the invention.

Fig. 20 is a circuit showing an embodiment of an air flow meter embodying the present invention.

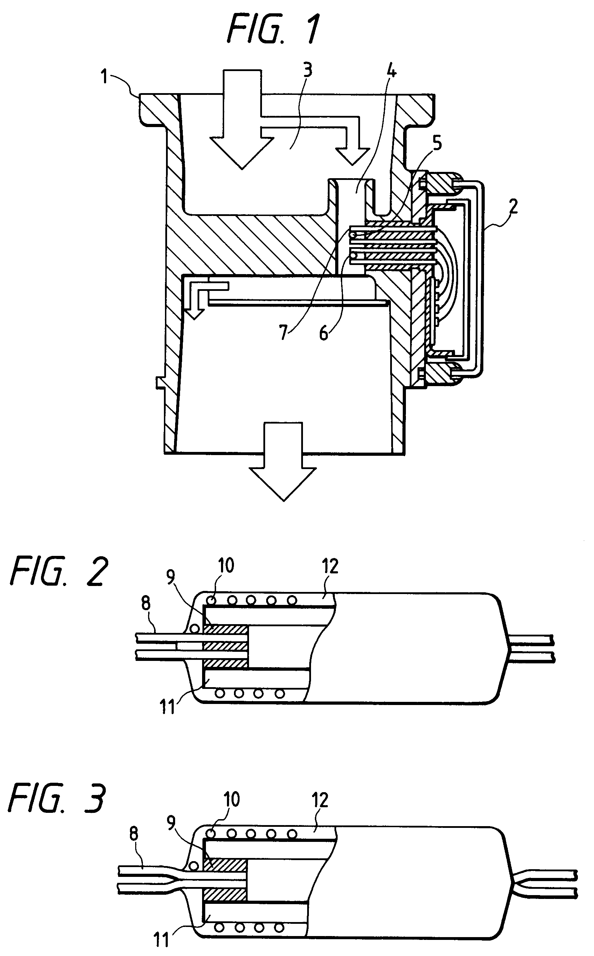

Fig. 1 shows a sectional structure of one form of air flow measuring device, which is generally composed of a body 1 and a module 2 mounted on the body. Air sucked into the body 1 is divided to flow in a main passage 3 and an auxiliary passage 4. A heating resistor 5 and a temperature sensing resistor 6 are welded to support pins 7 and are located in the auxiliary passage 4. The heating resistor 5 is supplied with current to heat it to a given temperature. The heating resistor 5 is heated so that a constant difference between its heating temperature and the air temperature is maintained irrespective of an amount of intake air. The air temperature is corrected by the temperature sensing resistor 6.

A unit comprising the heating resistor 5 is designed to have a four-terminal structure capable of measuring an air flow rate by a four-terminal method as shown in Figs. 2, 3, 4, 5, 6 and 7, thereby reducing the influence of resistance in a welding portion, a conductor member to a circuit board, etc.

Fig. 2 shows a first preferred embodiment of the structure of the unit of the heating resistor 5 in the air flow measuring device shown in Fig. 1. In this structure shown in Fig. 2, four leads 8 extend out, two from each end of the resistor unit. The two leads 8 are electrically connected at their base portions by a conductive adhesive 9 provided in a ceramic bobbin 11. A resistor 10 in the form of a helical winding on the exterior of the bobbin 11 is connected to the leads 8 and is covered with a covering member 12.

Fig. 3 shows a second embodiment of the structure of the unit of the heating resistor 5, similar to that of Fig. 2. In this structure shown in Fig. 3, the two leads 8 at each end are in close contact with each other at their base portions in the ceramic bobbin 11 to provide electrical connection. The base portions of the two leads 8 thus electrically connected are fixed by a conductive adhesive 9 or an organic adhesive 13 provided in the ceramic bobbin 11. The resistor 10 is connected to the leads 8 and is covered with the covering member 12.

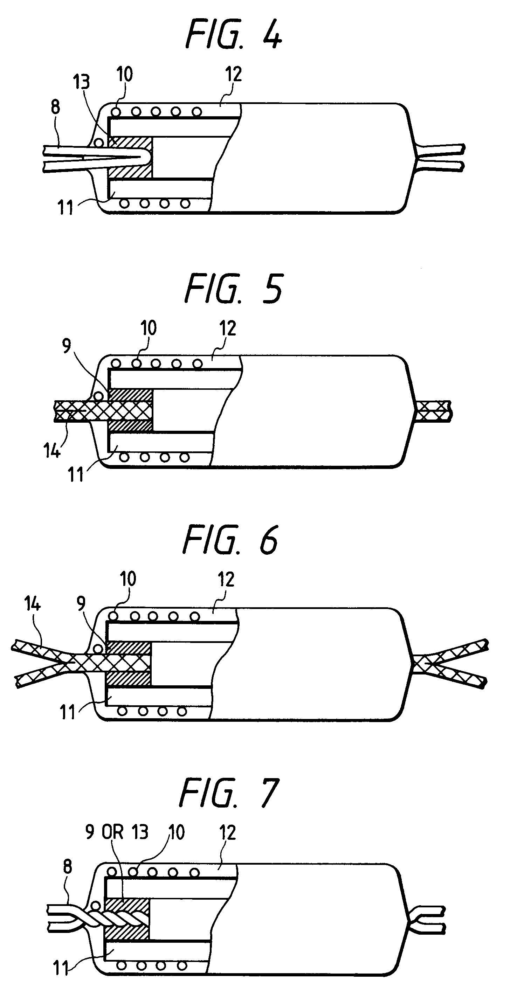

In the structure shown in Fig. 4, the four leads 8 of the heating resistor are formed by wires folded at their base portions located in the ceramic bobbin 11.

The folded or bent portion of the leads 8 is fixed by an organic adhesive 13 in the ceramic bobbin 11. The resistor 10 is connected to the leads 8.

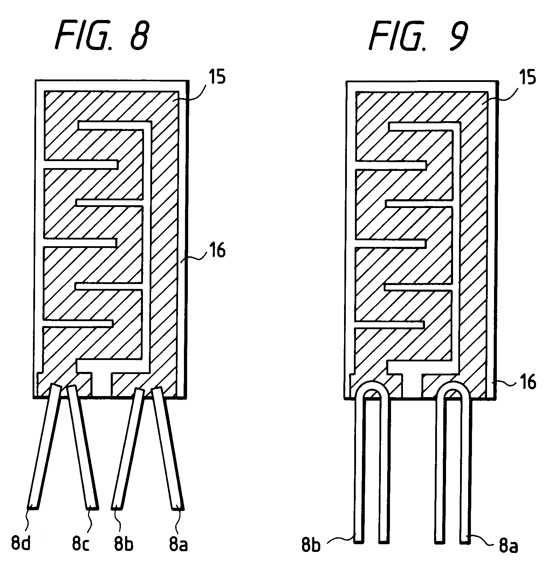

Figs. 5 and 6 show a fourth embodiment of the structure of the unit of the heating resistor 5 in which two net wires 14 extend from the two ends of the unit of the heating resistor 5. Each net wire 14 is fixed at its base portion by an organic adhesive 13 in the ceramic bobbin 11.

In actual use, the outwardly extending portion of the net wire 14 is divided into two parts as shown in Fig. 6. The resistor 10 is connected to the net wires 14 and is covered with the covering member 12. Thus, this unit of the heating resistor is constructed to have a four-terminal structure.

Fig. 7 shows a fifth embodiment of the structure of the unit of the heating resistor 5 in which the two leads 8 at each end are twisted at their base portions located in the ceramic bobbin 11 to provide electrical connection. The base portions of the two leads 8 thus electrically connected are fixed by a conductive adhesive 9 or an organic adhesive 13 in the ceramic bobbin 11. The resistor 10 is connected to the leads 8. This unit thus has a four-terminal structure.

Figs. 8, 9, 10, 11, 12, 13, 14 and 15 show various embodiments of a plate-like unit of a heating resistor 5 of Fig. 1 having a four-terminal structure.

As shown in Fig. 8, a resistor pattern 15 is formed as a thin layer of zig-zag shape on a plate 16, and four leads 8a, 8b, 8c and 8d are connected to the resistor pattern 15, respectively two at each end. The four leads 8a to 8d extend out from one end of the plate 16. Thus, the plate-like unit of the heating resistor is constructed to have a four-terminal structure.

Fig. 9 shows a second plate-like unit of the heating resistor in which a resistor pattern 15 is formed on a plate 16, and two double leads 8a and 8b at each end are folded at their base portions. The base portions of the two folded leads 8a and 8b are connected to the ends of the resistor pattern 15. The folded two leads 8a and 8b extend out from one end of the plate 16. Thus, the unit has a four-terminal structure.

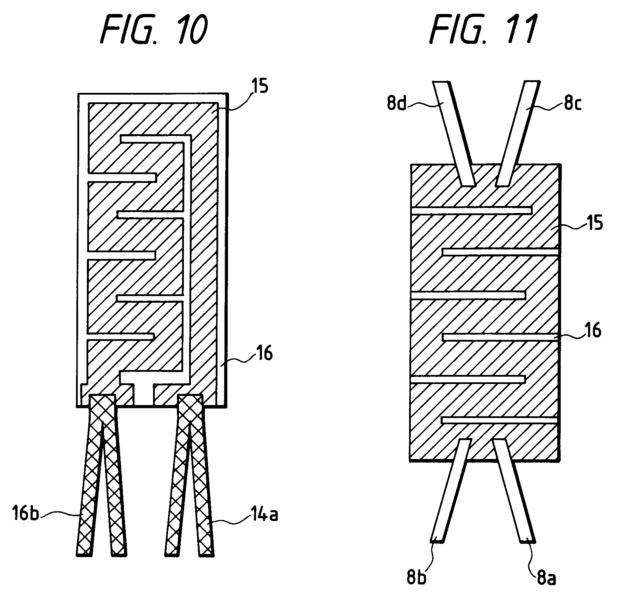

Fig. 10 shows a third plate-like unit of the heating resistor in which two net wires 14a and 14b are connected at their base portions to the respective ends of the resistor pattern 15. Each of the two net wires 14a and 14b is divided into two parts as shown, and extend out from one end of the plate 16. Thus, the unit has a four-terminal structure.

Fig. 11 shows a fourth plate-like unit of the heating resistor in which a zig-zag resistor pattern 15 is formed on a plate 16, and four leads 8a, 8b, 8c and 8d are connected in pairs to the ends of the resistor pattern 15. The four leads 8a to 8d extend in pairs from opposite ends of the plate 16, i.e. the leads 8a and 8b from one end of the plate 16, and the leads 8c and 8d from the other end of the plate 16. Thus, the plate-like unit has a four-terminal structure.

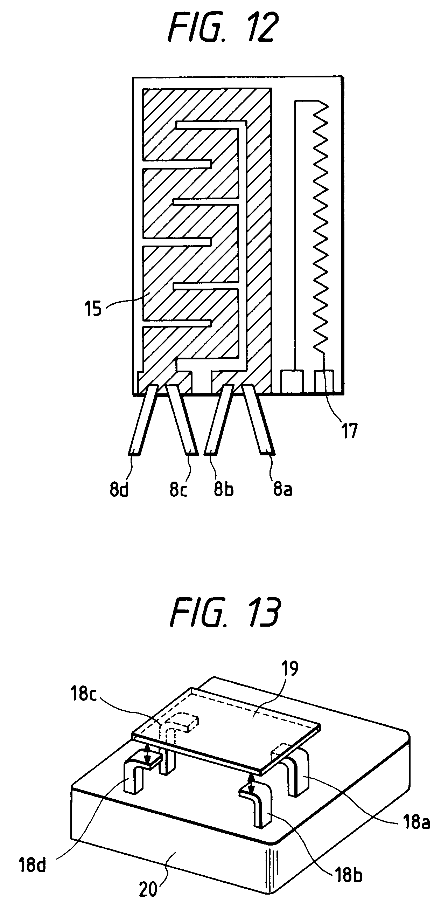

Fig. 12 shows a fifth plate-like unit of the heating resistor. The resistor pattern 15 is formed on the plate 16, and four leads 8a, 8b, 8c and 8d are connected to the resistor pattern 15, as in Fig. 8. Further, an indirect heating element 17 is provided on the plate 16 in the vicinity of the resistor pattern 15.

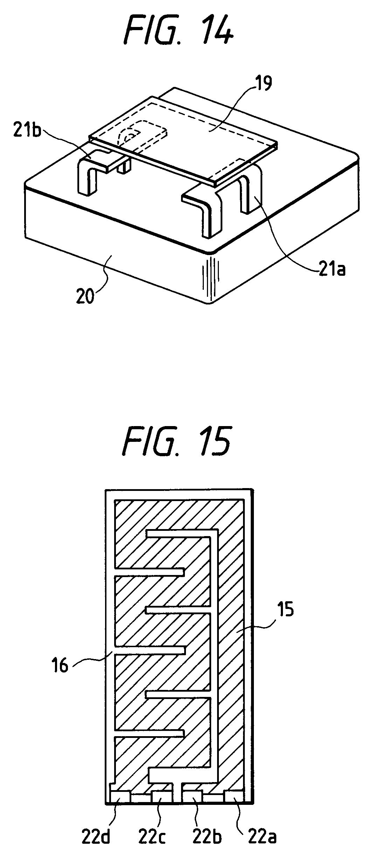

Figs. 13 and 14 shows embodiments of a mounted condition of a plate-like unit 19 of a heating resistor and a temperature sensing resistor having a four-terminal structure, similar to those of Figs. 8 to 12.

In the embodiment shown in Fig. 13, four terminals 18a, 18b, 18c and 18d extend out from a molded member 20, and the unit 19 of the heating resistor having a four-terminal structure is mounted at four points on the four terminals 18a to 18d of the molded member 20.

In the embodiment shown in Fig. 14, two terminals 21a and 21b extend out from a molded member 20, and the plate-like unit 19 of the heating resistor having a four-terminal structure is mounted at two points on the two terminals 21a and 21b of the molded member 20.

Fig. 15 shows another embodiment of the plate-like unit of the heating resistor having a four-terminal structure. In this, four terminals 22a, 22b, 22c and 22d are connected to a thin layer resistor pattern 15 formed on a plate 16. The four terminals 22a to 22d are located at one end of the plate 16. With this structure, the connectability of the plate-like unit is improved, and a general-purpose applicability of the plate-like unit is provided.

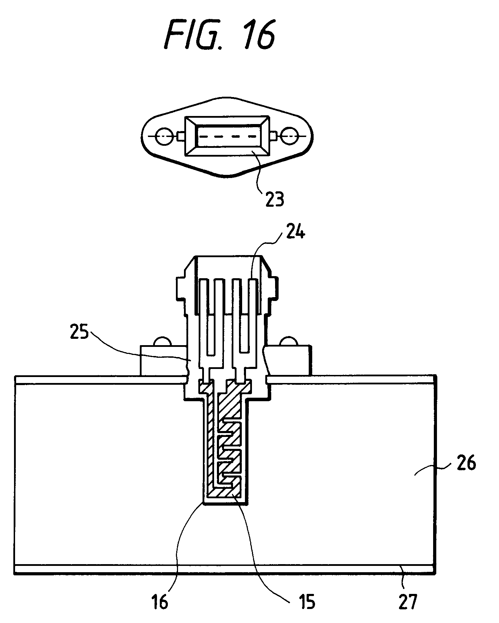

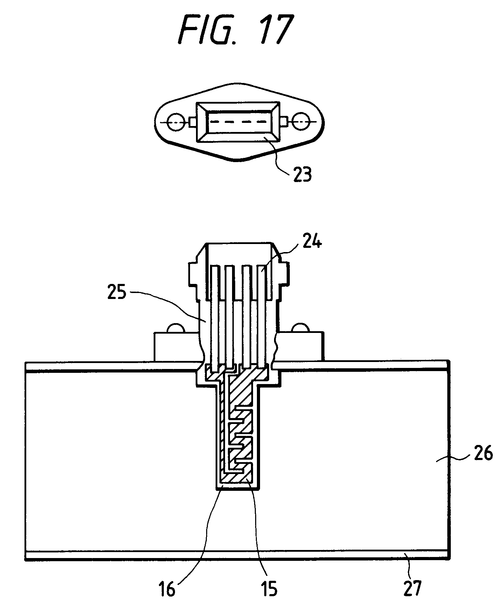

Figs. 16 and 17 show embodiments of a plate-like unit 25 of a heating resistor having a four-terminal structure, such as shown in Figs. 8 to 12, which unit is provided with a connector 23.

In the embodiment shown in Fig 16, the plate-like unit 25 having the connector 23 is mounted in an air passage 26 defined by a cylinder 27. A resistor pattern 15 formed on a plate 16 is connected to two forked terminals 24 so as to provide a four-terminal structure. Thus, the provision of the connector 23 contributes to improvement in connectability of the plate-like unit to the outside.

Fig. 17 shows a modification of the structure shown in Fig. 16 in which the resistor pattern 15 is formed on the plate 16 is again designed as to be connected to four terminals 24 so that a four-terminal structure is provided.

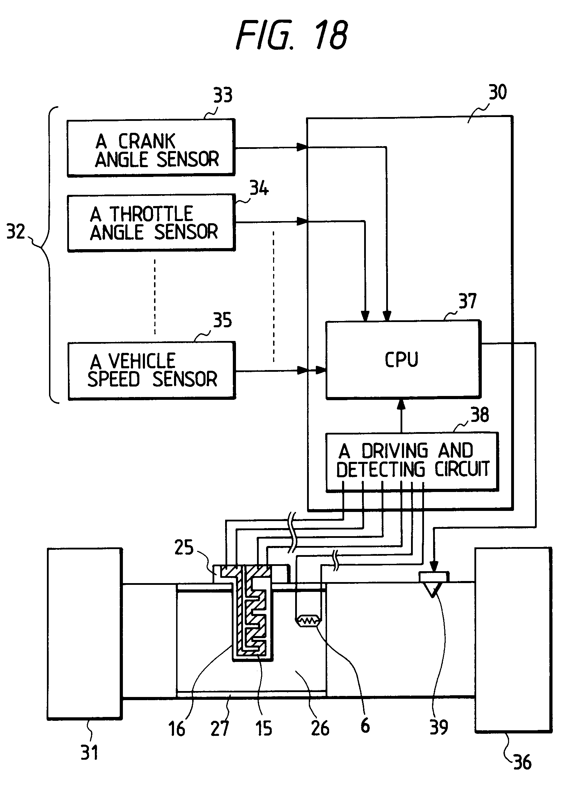

Fig. 18 is a block diagram showing an actual application of the plate-like unit having the connector 23 as shown in Fig. 16 or 17 to an engine. Fig. 18 shows a control unit 30. The control unit 30 includes a CPU 37 and a driving and detecting circuit 38 connected to the CPU 37. Various sensors 32 including a crank angle sensor 33, a throttle angle sensor 34, and a vehicle speed sensor 35 are connected to the CPU 37. The unit 25 of a heating resistor such as shown in Figs. 8 to 12 having a four-terminal structure with a connector 23 as shown in Fig. 16 or 17 is connected to the driving and detecting circuit 38.

The temperature sensing resistor 6 is also mounted in the pipe 26 and connected to the circuit 38.

The CPU 37 inputs signals from the sensor 32 and the unit 25 and sensor 6 through the driving and detecting circuit 38 to control a fuel injector 39. Reference numerals 31 and 36 denote an air cleaner and an engine, respectively.

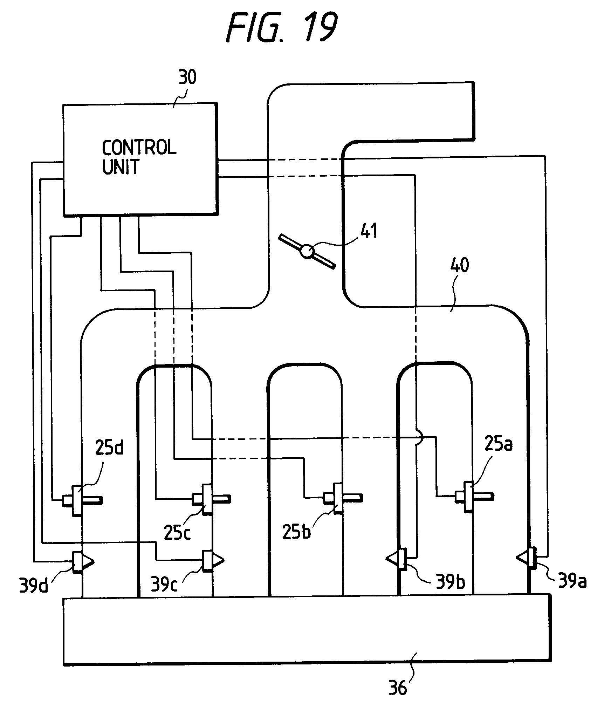

Fig. 19 is a block diagram showing an actual application of four resistor units 25a, 25b, 25c and 25d each having a four-terminal structure with a connector 23 as shown in Fig. 16 or 17 to individual cylinders of a engine 36 for the purpose of finer control of the engine 36. In Fig. 19, reference numeral 30 denotes a control unit for driving the four units 25a to 25d respectively located in four branch pipes of an intake manifold 40 and detecting signals from the four units 25a to 25d. The control unit 30 controls four fuel injectors 39a, 39b, 39c and 39d respectively located in the four branch pipes of the intake manifold 40 according to the signals from the four units 25a to 25d. Reference numeral 41 denotes a throttle valve.

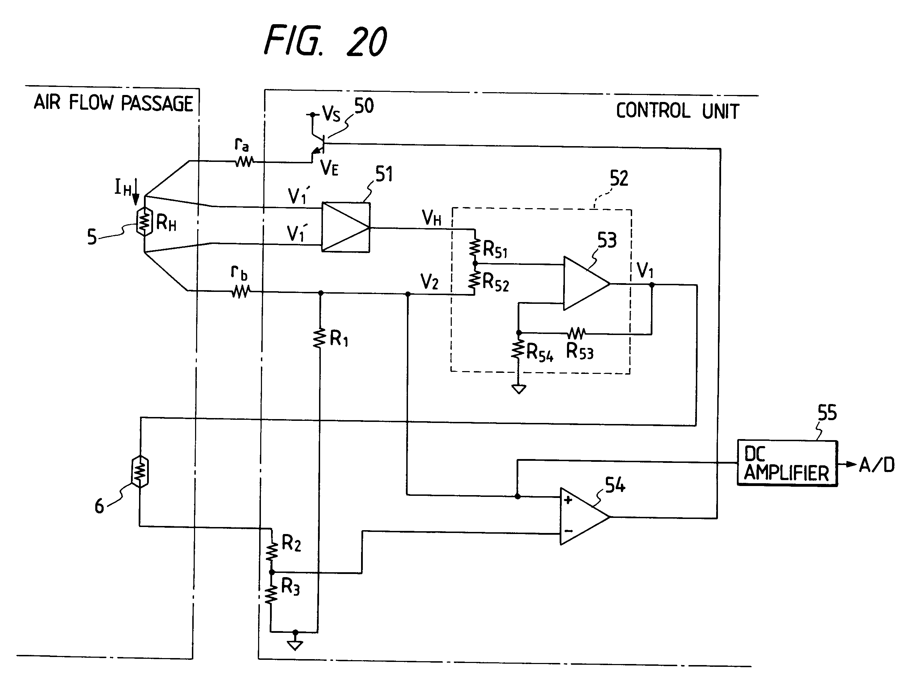

Fig. 20 is a circuit showing an embodiment of an air flow meter of the present invention. The heating resistor 5 and the temperature sensing resistor 6 are disposed in an air flow passage. The power transistor 50, differential amplifier 51, the summing circuit 52, the operational amplifier 54 and DC amplifier 55 are disposed in the control unit. The summing circuit 52 comprises the operation amplifier 53 and resistors R₅₁, R₅₂, R₅₃, R₅₄. V_{H}(=V₁'-V₂) is obtained by the amplifier 53 and V₁=(V_{H} + V₂) is obtained by the amplifier 54. The current flow corresponding to V₁ is supplied to the temperature sensing resistor 6. Therefore, in the embodiment of Fig. 20, it is not influenced by the resistor Ra and Rb.

According to the present invention, air flow rate can be detected highly accurately without any influence of wires etc.

## Claims

1. A meter for measuring air flow by resistance heating having:
a heating resistor;
a control device;
a first pair of leads connecting first and second parts of the heating resistor to the control device, the first and second parts being spaced apart along the heating resistor, the control device being arranged to apply a controlled current to the heating resistor via the first pair of leads;
characterised in that
a second pair of leads connects the first and second parts to the control device, the control device being arranged to measure a voltage between the first and second parts.

2. A meter according to claim 1, wherein said first and second parts are ends of said heating resistor.

3. A meter according to claim 1, wherein said ends of said heating resistor are located next to each other on a body supporting said resistor.

4. A meter for measuring air flow by resistance heating having:
a heating resistor; and
a control device, the control device being connected to the heating resistor and having first means for applying a current to the heating resistor and second means for measuring the voltage across the heating resistor.

5. A method of measuring air flow comprising the steps of:
applying a current across a heating resistor;
measuring a voltage across the heating resistor;
varying the current in dependence on the voltage;
measuring air flow in dependence on the current variation.
